## Europäisches Patentamt
## European Patent Office
## Office européen des brevets

(19)

(11) Numéro de publication: **0 217 692**
**B1**

(12) # FASCICULE DE BREVET EUROPEEN

(45) Date de publication du fascicule du brevet:
**19.09.90**

(51) Int. Cl.⁵: **G02B 27/00**, G01B 11/27,
G02B 27/30

(21) Numéro de dépôt: **86401809.8**

(22) Date de dépôt: **13.08.86**

(54) **Dispositif d'autoalignement pour système optique d'observation d'images infrarouges.**

(30) Priorité: **20.08.85 FR 8512531**

(43) Date de publication de la demande:
**08.04.87 Bulletin 87/15**

(45) Mention de la délivrance du brevet:
**19.09.90 Bulletin 90/38**

(84) Etats contractants désignés:
**DE GB IT NL SE**

(56) Documents cités:
**FR-A- 2 357 864**
**GB-A- 684 292**
**GB-A- 2 138 926**
**US-A- 4 152 729**
**US-A- 4 383 474**

(73) Titulaire: **THOMSON-CSF, 51, Esplanade du Général de Gaulle, F-92800 Puteaux(FR)**

(72) Inventeur: **Dufresne de Virel, François, THOMSON-CSF SCPI 19, avenue de Messine, F-75008 Paris(FR)**

(74) Mandataire: **Trocellier, Roger et al, THOMSON-CSF SCPI, F-92045 PARIS LA DEFENSE CEDEX 67(FR)**

ACTORUM AG

## Description

L'invention concerne un dispositif d'auto-alignement pour système optique d'observation d'images infrarouges permettant d'asservir un système de prise de vue, et notamment un système optique, par rapport à une direction déterminée. L'invention trouve des applications particulièrement intéressantes dans les systèmes de prise de vue et de visée embarqués sur des engins mobiles.

Pour l'observation d'images infrarouges (3-5 μm, 8-12 μm etc), de nombreux systèmes optiques ont été developpés. Ceux-ci sont souvent appelés FLIR (Forward looking infrared) lorsque leur résolution permet d'obtenir une image vidéo de type télévision. On peut décomposer ces systèmes en deux sous-ensembles : une optique de focalisation et un sous-ensemble caméra.

Le sous-ensemble caméra comprend les éléments suivants : un bloc détecteur infrarouge refroidi, un système de balayage et une optique interne permettant d'analyser le plan image de l'optique de focalisation (plan image intermédiaire).

Ces systèmes sont souvent placés dans des environnements très sévères (vibrations, contraintes thermiques) qui peuvent donner lieu à des déplacements des systèmes optiques, mentionnés précédemment (optique de focalisation, sous-ensembles caméra), les uns par rapport aux autres ou des déformations de ces dits systèmes.

Cela peut provoquer une dégradation notable de leur performances fonctionnelles par rapport à leurs valeurs au repos.

Une des exigences les plus fondamentales est l'alignement optique d'un tel système par rapport à une direction déterminée de l'espace ou de l'équipement. Une dénomination communément utilisée est le terme "ligne de visée". De plus, dans le cas d'un système articulé, cet alignement peut avoir une direction différente de celle recherchée, du fait de la non-perfection optique, mécanique et électrique des mouvements utilisés. Dans le fonctionnement opérationnel de certains de ces systèmes, ces déformations sont critiques par rapport aux performances recherchées (écartométrie très précise de cible...) et peut donc nuire au fonctionnement du système.

Le but de la présente invention est de pouvoir mesurer l'amplitude de ces déformations, pour pouvoir ensuite en tenir compte pour une correction ou un asservissement de position de ligne de visée de ces systèmes.

Dans la technique, on connaît des sytèmes permettant de réaliser la mesure de ces déformations. Ces systèmes utilisent une source lumineuse auxiliaire émettant un faisceau lumineux à travers le système optique (optique de focalisation) dont on doit régler l'alignement par rapport à la ligne de visée et un détecteur auxiliaire destiné à détecter le faisceau lumineux émis par la source lumineuse auxiliaire. Ils nécessitent en outre des lames semi-réfléchissantes permettant de séparer le faisceau lumineux émis par la source lumineuse du faisceau provenant de l'objet observé et reçu par l'optique de focalisation.

Ces systèmes présentent l'inconvénient de réduire les performances photométriques du systèmes et de réduire la bande spectrale d'utilisation en raison de la présence des miroirs semi-réfléchissants et des souces lumineuses auxiliaires. De plus, les souces lumineuses auxiliaires peuvent être à l'origine de lumière ou images parasites perturbant le fonctionnement de ces systèmes.

C'est pourquoi l'invention a pour objet un système permettant d'éviter ces inconvénients.

Le système de l'invention est fondé sur l'utilisation d'un effet observé avec les détecteurs thermiques qui sont en général refroidis. Cet effet dit effet "Narcisse" se produit lorsque, au cours d'un balayage du champ image, le détecteur voit sa propre image (ou celle de son diaphragme froid) obtenu par autocollimation sur un dioptre optique, image froide sur un fond chaud. Cet effet est réduit autant que possible lors du calcul de la combinaison optique de l'objectif de focalisation essentiellement par suppression de toute surface proche de l'autocollimation pour la surface sensible.

Le système de l'invention a pour particularité d'utiliser cet effet "Narcisse" habituellement nuisible dans les systèmes optiques thermiques à balayage.

L'invention concerne donc un système optique d'observation d'images infrarouges comprenant:

– un système optique d'entrée de focalisation recevant un faisceau objet infrarouge (F.O.) et focalisant un faisceau image (F.I.) dans un plan image;

– un système de lecture infrarouge comportant un bloc photodétecteur infrarouge refroidi à une température déterminée et disposé dans ledit plan image, pour détecter, en fonction de la position dans le plan image, l'intensité reçue du faisceau image et pour fournir un signal de lecture;

– un dispositif de détection du déplacement d'une image formée dans le plan image par rapport à une position de référence, ledit dispositif comportant un miroir de renvoi situé devant et en face de l'ouverture de champ du système optique d'entrée de focalisation, de position fixe et orienté de façon à renvoyer au système de lecture sa propre image;
caractérisé en ce qu'il comporte également:

– un dispositif d'écartométrie recevant du système de lecture un signal d'identification de ladite propre image renvoyée par le miroir et comprenant un circuit de détection permettant de détecter l'écart entre la position de référence constituée par une position prédéterminée de ladite propre image et la position détectée de cette image, ledit circuit de détection fournissant un signal d'écart.

Les différents objets et caractéristiques de l'invention apparaîtront plus clairement à la lecture de la description qui va suivre faite en se reportant aux figures annexées qui représentent:

- la figure 1, un système optique simplifié d'observation d'images infrarouges de l'art connu;
- les figures 2 et 3, des systèmes de balayage pour système optique d'observation d'images infrarouge connus dans la technique;

- la figure 4, un objectif d'entrée de focalisation de l'art connu;
- la figure 5, un autre objectif d'entrée de focalisation à miroirs de renvoi selon l'art connu;
- les figures 6 et 7, des dispositifs d'auto-alignement pour systèmes optiques d'observation d'images infrarouges ;
- la figure 8, un exemple de réalisation simplifié du dispositif d'auto-alignement pour systèmes optiques d'observation d'images infrarouges selon l'invention ;
- la figure 9, un schéma explicatif du fonctionnement du dispositif d'auto-alignement selon l'invention ;
- la figure 10, un exemple de réalisation détaillé du dispositif d'auto-alignement selon l'invention ;
- les figures 11 et 12, un exemple de dimensionnement du dispositif d'auto-alignement selon l'invention.

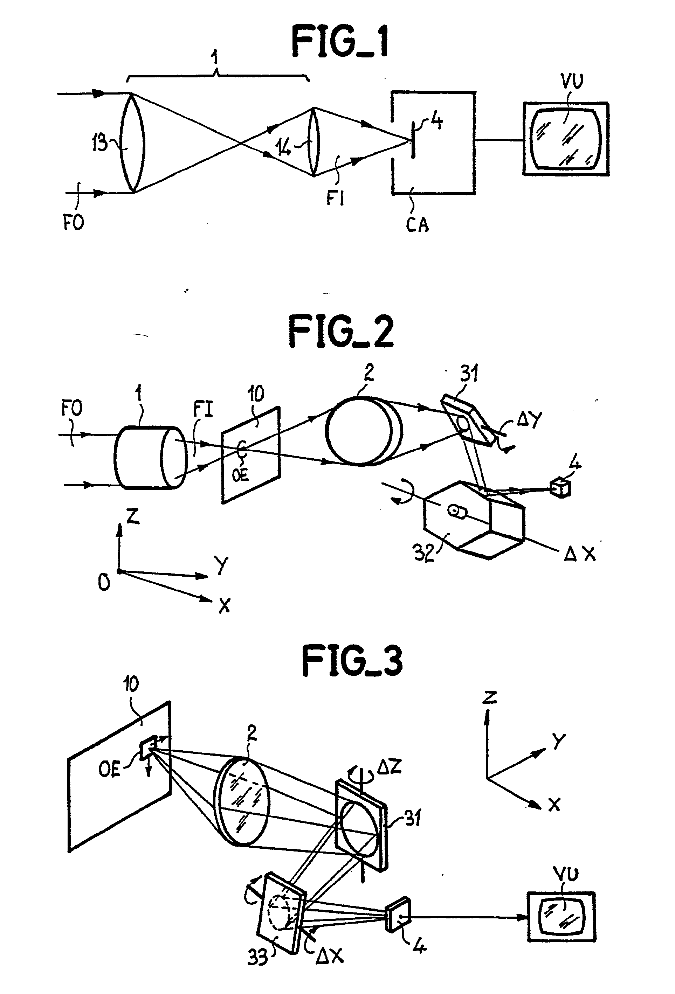

La figure 1 illustre de façon simplifiée un dispositif de prise de vues infrarouge selon un exemple de réalisation de l'art connu.

Un faisceau lumineux objet FO, provenant d'un objet non représenté et situé à gauche de la figure 1, est reçu par un système optique d'entrée de focalisation 1. Ce système optique est représenté, à titre d'exemple, sous la forme de deux lentilles 13 et 14.

Le système optique d'entrée de focalisation 1, recevant le faisceau objet FO, donne lieu à un faisceau image FI qui est focalisé dans un plan de détecteurs 4. Ce plan de détecteurs 4 fait partie de la caméra CA qui possède des dispositifs de lecture de l'image reçue dans le plan de détecteurs 4. Ces dispositifs ne sont pas représentés sur la figure 1 et feront l'objet de la description de la figure 2.

La caméra CA lit l'image reçue et commande son affichage sur un écran d'affichage VU ou son stockage dans un dispositif d'enregistrement.

La figure 2 donne un exemple de réalisation des dispositifs de lecture de la caméra CA.

Sur cette figure on retrouve le système optique d'entrée de focalisation 1 recevant le faisceau objet FO et retransmettant le faisceau image FI. Le faisceau image FI se focalise dans un plan 10 qui a été représenté sur la figure mais qui est un plan fictif. La focalisation du faisceau FI détermine dans le plan 10 une zone élémentaire OE.

Un système optique d'analyse 2 reçoit le faisceau FI. La zone élémentaire OE est donc un objet pour le sytème optique 2. Celui-ci focalise le faisceau lumineux vers un système de balayage bidimensionnel 31, 32 qui renvoi le faisceau lumineux vers un bloc photodétecteur 4.

Le système de balayage comprend un miroir 31 orientable autour d'un axe ΔY (parallèle à un axe OY) permettant de balayer le plan 10 selon une direction OZ (direction verticale sur la figure 2) et de capter les faisceaux lumineux issues de zones élémentaires (OE) situées sur une ligne verticale.

Un dioptre polygonal régulier 32 tourne autour d'un axe ΔX parallèle à un axe OX. Il permet de balayer le plan 10, lorsque le miroir 31 est immobile, selon une direction orthogonale à la direction OZ.

L'association des mouvements du miroir 31 et du dioptre 32 permet donc de balayer horizontalement et verticalement le plan 10. La lumière issue de chaque zone élémentaire OE du plan 10 peut donc être retransmise au bloc photodétecteur 4. Celui-ci explore donc le plan 10 par l'intermédiaire du système optique 2, du miroir pivotant 31 et du dioptre 32. Le photodétecteur 4 peut donc détecter l'image transmise par un faisceau FO au système optique d'entrée 1.

La réalisation du sytème de balayage peut également être conforme, comme connu dans la technique, au mode de réalisation de la figure 3.

Selon ce mode de réalisation, un système de balayage bidimentionnel comprend alors deux miroirs pivotants 31 et 33 autour de deux axes, X et Z. Ce système conjugue optiquement des zones élémentaires OE du plan 10, avec le plan photodétecteur 4. La conjugaison optique s'effectue à l'aide d'une lentille ou plus généralement d'un objectif 2, les plans 10 et le photodétecteur 4 étant disposés, respectivement dans les plans objet et image de l'objectif 2.

Des moyens de commande, non illustrés, permettant la mise en rotation autour de leurs axes respectifs, ΔX et ΔZ, des miroirs 31 et 33. Les mouvements de ces miroirs sont synchronisés de manière à effectuer l'exploration du plan 10 selon une configuration de balayage prédéterminée. Le plus souvent le balayage sera du type télévision, c'est-à-dire comprenant l'exploration séquentielle des points d'une ligne, par exemple suivant l'axe Y, et l'exploration séquentielle des lignes, suivant l'axe Z, de manière à explorer toutes les zones élémentaires de l'objet.

Le photodétecteur convertit l'énergie lumineuse détectée en signal électrique transmis à un circuit de traitement de signal non représenté dont la sortie alimente un dispositif de visualisation VU, par exemple un écran cathodique.

Des moyens de mémorisation tampon doivent naturellement être prévus pour adapter la vitesse du balayage mécanique à celle du balayage électronique mise en oeuvre pour un écran cathodique.

On peut encore utiliser des moyens de visualisation à rémanence.

Dans de nombreux cas d'utilisation de tels systèmes optiques d'observation d'images infrarouges doivent être alignés par rapport à une direction fixe ou déterminée. C'est notamment le cas lorsque le système optique d'observation est lié à l'exploitation d'un autre équipement. La direction de visée du système optique d'observation doit alors être asservie à la position de cet équipement.

Principalement, l'axe du système optique d'entrée de focalisation 1 doit être parallèle à une direction déterminée. Il s'agit alors de mesurer tout écart pouvant exister entre l'axe du système optique et ladite direction. Connaissant cet écart, on corrige l'image reçue par le système optique d'observation ou bien on commande l'asservissement de direction de l'axe du système optique d'entrée 1 ou tout autre dispositif permettant de modifier cet alignement.

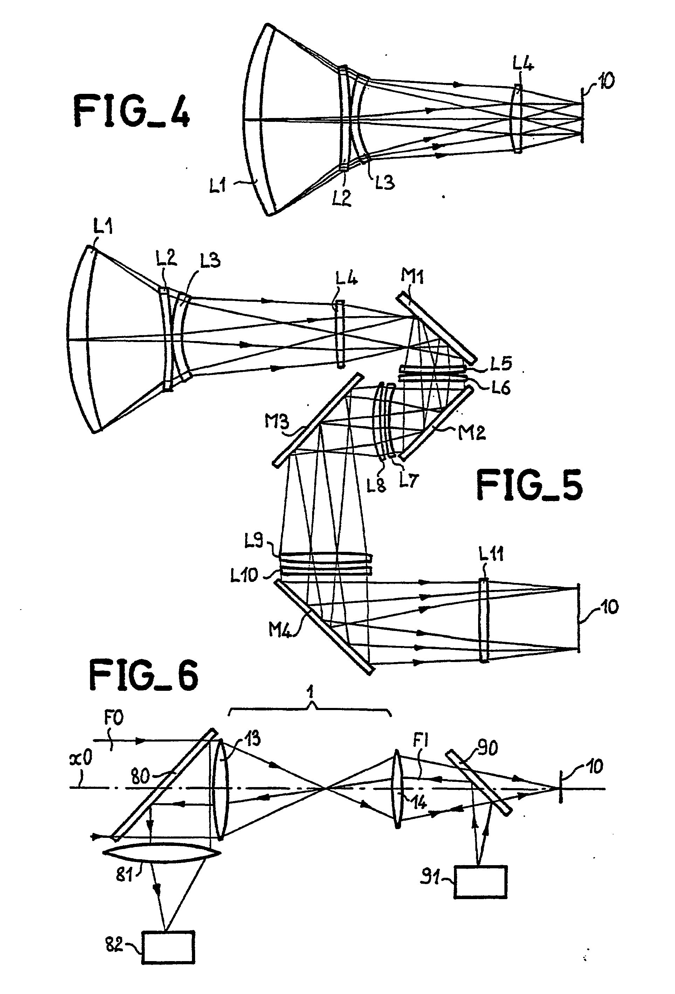

Un système optique d'entrée de focalisation peut être un objectif de conception linéaire tel que celui représenté en figure 4 et comprenant des lentilles L1 à L4 focalisant un faisceau d'entrée sur un plan 10.

Il peut être également de conception coudée voire articulée comme celà est représenté en figure 5. Il comporte alors, par exemple, une série de lentilles L1 à L11 avec, intercalés entre ces lentilles, des miroirs M1 à M4 inclinés convenablement pour focaliser un faisceau incident dans un plan 10. Un ou plusieurs des miroirs M1 et M4 peuvent être articulés pour orienter la vision de l'objectif.

La fixation d'un objectif qu'il soit du type représenté en figure 4 ou en figure 5 est soumise à des contraintes thermiques et mécaniques qui peuvent modifier l'orientation de son axe optique. Un objectif du type de la figure 5, en raison de sa plus grande complexité est semble-t-il plus sensible à de telles contraintes. C'est pourquoi, on prévoit des systèmes permettant de modifier l'orientation des axes optiques de ces objectifs. Dans la technique, on connait des systèmes permettant aussi d'asservir l'axe optique des objectifs de caméras par rapport à une direction fixe.

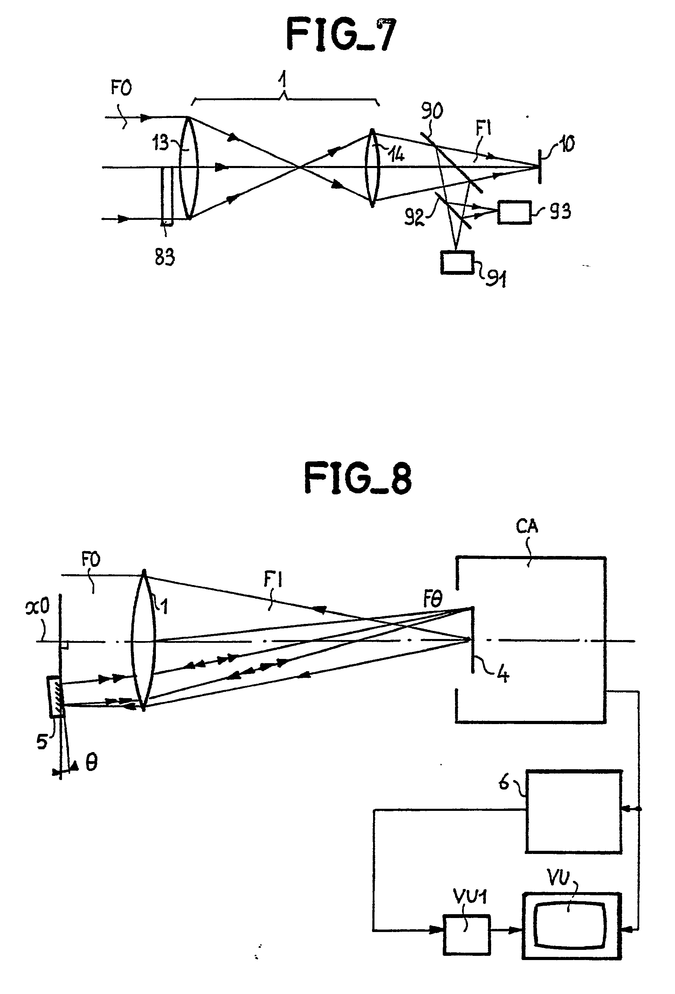

C'est ainsi que sur la figure 6 on a prévu, de part et d'autre d'un système optique d'entrée 1 dont on doit asservir l'axe optique xO par rapport à une direction fixe, deux miroir inclinés à 45 degrés 80 et 90 placés sur l'axe optique xO. Une source lumineuse 91 dirige un faisceau lumineux sur le miroir 90 qui le réfléchit vers les lentilles 13 et 14 du système optique 1, lesquelles retransmettent le faisceau au miroir 80 qui le réfléchit vers un détecteur 82 à travers une lentille de focalisation 81.

La source, les miroirs 80 et 90 et le détecteur 82 sont rigoureusement fixe et déterminent une direction à laquelle doit être asservi l'axe optique du système optique 1. En cas de décalage de l'axe du système optique 1 par rapport à cette direction, le détecteur 82 détecte ce décalage et peut effectuer les corrections nécessaires.

Il est à noter que la source 91 et le détecteur 82 peuvent être inversés.

En figure 7 a été représenté un autre type de dispositif d'alignement de type connu dans la technique. Selon ce dispositif la source 91 et le détecteur 93 sont placés d'un même côté par rapport au système optique 1. Ils sont couplés au système optique 1 par deux miroirs semi-réfléchissants 90 et 92 disposés à 45 degrés. Du côté opposé du système optique est disposé, sur le trajet d'un faisceau lumineux. issu de la source 91, une lame semi-réfléchissante 83 qui renvoie le faisceau lumineux vers le détecteur 93.

Les détecteurs 91 et 93, les miroirs 90, 92 et 83 sont fixés rigidement. Ils déterminent une direction d'alignement selon laquelle doit être aligné l'axe du système optique 1.

L'inconvénient des sytèmes ainsi décrits réside dans le fait qu'ils nécessitent une source auxiliaire (91) et éventuellement un détecteur auxiliaire qui peuvent causer des perturbations, telles que les images parasites dues à de la lumière parasite, ou bien, réduire les performances photométriques du système en raison de la présence de dispositifs optiques supplémentaires tels que les miroirs semi-réfléchissants.

L'invention permet de pallier ces inconvénients en utilisant un effet, dit effet "Narcisse", selon lequel un photodétecteur peut dans certains cas d'utilisation voir sa propre image, en raison de réflexions parasites que l'homme de l'art tend à supprimer autant que possible.

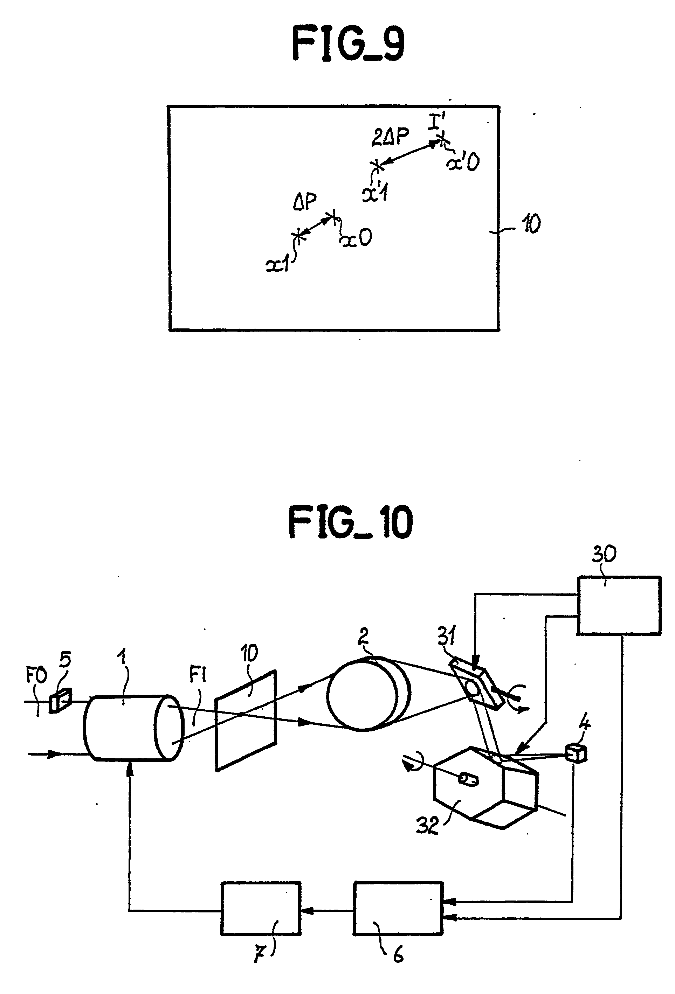

En se reportant à la figure 8 on va donc décrire un exemple de réalisation simplifié d'un dispositif d'auto-alignement d'un système optique d'observation d'images infrarouge selon l'invention.

Sur cette figure 8, le système optique d'entrée de focalisation 1 a été simplement représenté par une lentille unique d'axe optique xO. Cette lentille reçoit d'un objet à observer, un faisceau objet FO et focalise un faisceau image sur un dispositif de détection 4 d'une caméra thermique.

Un miroir 5 de faible dimension est placé devant le système optique d'entrée 1 du côté opposé à la caméra thermique CA. Le miroir est fixé rigidement sur une structure mécanique non représentée qui donne une référence mécanique d'alignement.

Un système d'écartométrie 6 est connecté à la caméra thermique CA. Et reçoit l'image reçue par la caméra thermique CA.

Un dispositif de visualisation VU est également connecté à la caméra et permet d'afficher toute image reçue par la caméra.

Le miroir 5 renvoi au détecteur 4 sa propre image (effet Narcisse). Il est incliné d'un angle θ par rapport à l'axe d'alignement XO de telle sorte que l'image Narcisse du détecteur soit situé au bord du champ couvert par l'optique et balayé par la caméra thermique : le miroir est en autocollimation pour une direction particulière du champ objet du système optique.

Toute déformation ou déplacement du sytème optique 1 produit un écart de position de l'image de retour du détecteur avec une amplitude double par rapport au défaut d'alignement existant sur la ligne de visée.

Comme celà est représenté en figure 9, si la position de l'axe du système optique 1 est x1 au lieu de xO présentant ainsi un décalage ΔP, l'image dans le plan du photodétecteur du miroir sera x'1 au lieu de x'O conduisant ainsi à détecter un décalage de 2 ΔP.

La mesure de cet écart ou l'asservissement de l'image Narcisse du détecteur à sa position nominale à l'aide de l'écartomètre auxiliaire et un élément mobile de l'optique (miroir asservi, tensions de balayage de la caméra, etc) peut permettre de connaitre la position de cette ligne de visée ou de maintenir un alignement très précis du système optique.

Au cas où l'optique de focalisation serait articulée, (exploration de champ à grand débattement, asservissement de position sur un objet mobile par rapport à l'ensemble objectif-caméra), le système décrit fonctionne également. En connaissant les déformations provoquées nominalement sur l'optique, on peut en déduire la position théorique de l'image de retour.du détecteur dans le plan image, et l'écartomètre doit fonctionner par rapport à ce point de référence qui n'est plus fixe dans le temps. Ce système permet alors de controler et de corriger à la fois les déformations d'alignement non controlées (vibrations, thermique) et celles controlées (modification du système par déplacement ou rotation d'un ou plusieurs éléments, décalage du plan image balayé...). Du fait de son positionnement en bord de champ utile de la caméra, l'image Narcisse ne gène pas le fonctionnement du sytème optique qui utilise la portion centrale de l'image (écartométrie sur cible par exemple).

Selon l'exemple de réalisation de la figure 8 le système d'écartométrie 6 calcule l'écart détecté dans la position de l'axe du système optique 1. Il fournit un signal correspondant à un circuit de correction d'image VU1 qui commande le dispositif de visualisation VU pour que celui-ci affiche une image correctement centrée.

En se reportant à la figure 10, on va maintenant décrire un exemple de réalisation détaillé de l'invention utilisant un système de balayage du type décrit en se reportant à la figure 2.

On retrouve sur cette figure les mêmes éléments et portant les mêmes références que ceux de la figure 2. De plus, on trouve un miroir 5 situé dans le champ du système optique 1. Ce miroir est fixé sur une structure rigide, non représentée, servant de référence géométrique au système.

Un circuit de commande 30 permet de commander la rotation du dioptre 32 et l'oscillation du miroir 31, et d'obtenir ainsi un balayage du plan 10 par le photodétecteur 4.

Le photodétecteur 4 est situé à l'intérieur d'une enceinte froide non représentées, refroidissant le photodétecteur à une température lui permettant de détecter aisément les rayonnements infrarouges. A titre d'exemple, le photodétecteur 4 peut être placé dans une enceinte remplie d'azote liquide permettant d'obtenir une température de 77 degrés Kelvin.

En raison du balayage du miroir 31 et du dioptre 32, le photodétecteur 4 doit voir à intervalles réguliers son image dans le miroir 5. Le photodétecteur 4 étant à une température basse (77 degrés Kelvin selon l'exemple choisi), il reçoit son image en retour à une température sensiblement la même et il l'identifie aisément par rapport au reste de l'image reçue dans l'infrarouge. La transition importante de température entre l'image infrarouge et l'image en retour du photodétecteur permet aisément de détecter cette dernière.

Un système d'écartométrie 6 est connecté au photodétecteur 4 qui lui transmet un signal à chaque détection de sa propre image. Le système 6 est également connecté au circuit de commande 30 et reçoit de celui-ci des signaux de coordonnées de balayage. A chaque détection d'une image en retour du photodétecteur, le système d'écartométrie connait la position des organes de balayage (miroir 31 et dioptre 32) et connait donc la position du miroir 5 par rapport à l'ensemble du système et notamment par rapport au système optique d'entrée 1.

Par ailleurs, le système d'écartométrie connait la position théorique (en position de repos) du miroir 5 par rapport au système optique d'entrée 1.

Le système d'écartométrie calcule donc l'écart de position pouvant exister entre la position réelle du miroir 5 et la position théorique. En fonction de l'écart trouvé, il fournit un signal d'écart à un circuit de commande d'alignement qui commande l'alignement mécanique du système optique 1.

Dans le cas où le système optique 1 est un objectif du type représenté en figure 4, le réglage d'alignement consiste en un déplacement de l'objectif.

Dans le cas où le système optique 1 est un objectif du type représenté en figure 5, le réglage d'alignement consiste en une orientation d'un ou plusieurs miroirs de l'objectif.

Il est à noter que dans le cas où l'objectif de la figure 5 est articulé, il peut observer dans différentes direction. Cependant, le système de commande 30 de la figure 10 connait la direction d'observation et la communique au système d'écartométrie. Celui-ci est donc à même de connaitre la position théorique du miroir 5 dans la nouvelle direction de visée ce qui permet toujours d'effectuer de la même manière un alignement du système optique 1.

Il est également à noter qu'au lieu d'agir sur le réglage d'alignement du système optique 1, le système d'écartométrie aurait pu agir, comme décrit en relation avec la figure 8, sur le centrage de l'image affichée sur un dispositif de visualisation.

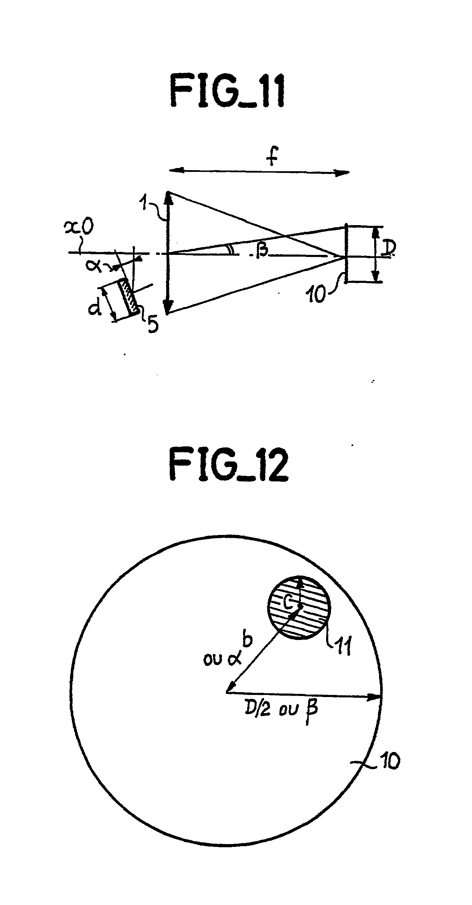

En se reportant aux figures 11 et 12, on va maintenant décrire un exemple de dimensionnement et d'orientation du miroir 5 adapté à un système optique du commerce.

Selon l'exemple pris, le système optique d'entrée à une distance focale f = 800 mm et couvre un champ circulaire de diamètre D = 56 mm soit un champ angulaire de $\beta$ = ± 2° avec une pupille d'entrée de diamètre $\varnothing_P$ = 100 mm.

En supposant qu'un miroir parfait (coefficient de réflexion R = 100 %) couvrant toute la pupille donne une variation de flux $\Delta\varnothing_0$, à travers l'optique entre l'image Narcisse et le fond. En supposant également que le système d'écartométrie opère dans de bonnes conditions avec un flux image différent du flux de fond d'une valeur $\Delta\varnothing_1$. On supposera par exemple que $\Delta\varnothing$ est cent fois plus faible que $\Delta\varnothing_0$.

Pour le calcul de la dimension du miroir on prend par contre, un facteur de réflection R égal à 95 %. La surface utile du petit miroir est alors donné par la formule =

$$S_A = \frac{S_{P.\Delta\varnothing_1}}{R.\Delta\varnothing_0}$$

dans laquelle = $\Delta\varnothing_1$ = $10^{-2} \times \Delta\varnothing_0$

$$S_P = \frac{\pi}{4} \varnothing_P^2$$

(surface de la pupille d'entrée)
R = 0,95

On obtient un miroir 5 d'une surface environ 83 mm².

Dans le cas d'un miroir de forme circulaire, il convient de prendre un miroir de diamètre d = 10,3 mm environ.

Si l'on suppose que l'on veuille mesurer des variations d'alignement d'amplitude maximale de + 0,2 degré, on pourra donc positionner le miroir de renvoi avec une inclinaison, par rapport à l'axe optique de référence du système, de α = 1,75°.

Si l'on considère que le plan image du système de l'invention est circulaire. Son rayon de valeur D/2 correspond à un angle de β = 2 degrés. Le centre de la zone de travail de l'écartomètre est située à une distance b du centre du plan image correspondant à l'angle α = 1,75 degrés. Cette zone de travail est circulaire et a pour rayon c une valeur correspondant à un angle de 0,2 degré.

## Revendications

1. Système optique d'observation d'images infrarouges comprenant:
- un système optique d'entrée de focalisation (1) recevant un faisceau objet infrarouge (F.O.) et focalisant un faisceau image (F.I.) dans un plan image (10);
- un système de lecture infrarouge comportant un bloc photodétecteur infrarouge (4) refroidi à une température déterminée et disposé dans ledit plan image, pour détecter, en fonction de la position dans le plan image, l'intensité reçue du faisceau image et pour fournir un signal de lecture;
- un dispositif de détection du déplacement d'une image formée dans le plan image par rapport à une position de référence, ledit dispositif comportant un miroir de renvoi (5) situé devant et en face de l'ouverture de champ du système optique d'entrée de focalisation, de position fixe et orienté de façon à renvoyer au système de lecture (4) sa propre image;
caractérisé en ce qu'il comporte également:
- un dispositif d'écartométrie (6) recevant du système de lecture (4) un signal d'identification de ladite propre image renvoyée par le miroir (5) et comprenant un circuit de détection permettant de détecter l'écart entre la position de référence constituée par une position prédéterminée de ladite propre image et la position détectée de cette image, ledit circuit de détection fournissant un signal d'écart.

2. Système optique d'observation d'images infrarouges selon la revendication 1, caractérisé en ce que le système de lecture comporte un système de balayage (31, 32, 33) et un dispositif optique de focalisation (2) permettant de transmettre au bloc photodétecteur infrarouge (4) la lumière provenant du plan image (1), le miroir de renvoi (5) étant vu par le bloc photodétecteur infrarouge (4) à travers ce système de balayage, le balayage dudit plan s'effectuant dans un temps prédéterminé.

3. Système optique d'observation d'images infrarouges selon la revendication 2, caractérisé en ce qu'il comprend un circuit de calcul permettant de calculer l'écart pouvant exister entre la position théorique du miroir et la position détectée et fournissant en échange un signal d'écart.

4. Système optique d'observation d'images infrarouges selon la revendication 1, dans lequel le système optique d'entrée possède des moyens de commande d'alignement (7), caractérisé en ce que le signal d'écart, fourni par le dispositif d'écartométrie, est transmis à ces moyens de commande (7).

5. Système optique d'observation d'images infrarouges selon la revendication 2, caractérisé en ce que le miroir de renvoi (5) est placé dans l'ouverture de champ du système optique d'entrée en un point situé à proximité de la périphérie de cette ouverture de champ.

6. Système optique d'observation d'images infrarouges selon la revendication 4, caractérisé en ce que le dispositif d'écartométrie calcule les coordonnées de l'écart détecté et fournit deux signaux au moins de coordonnées d'écart aux moyens de commande d'alignement (7).

7. Système optique d'observation d'images infrarouges selon la revendication 3, comprenant des moyens d'affichage de l'image (VU) reçue par le système optique d'entrée de focalisation (1) le dispositif optique de focalisation (2), le système de balayage (3), le bloc photodétecteur infrarouge (4) caractérisé en ce que les moyens d'affichage comprennent un circuit de correction d'image (VU1) et que le dispositif d'écartométrie (6) transmet ledit signal d'écart au circuit de correction d'image (VU1).

8. Système optique d'observation d'images infrarouges selon la revendication 7, caractérisé en ce que le dispositif d'écartométrie fournit deux signaux au moins de coordonnées d'écart au circuit de correction d'image (VU1).

## Claims

1. An optical infrared image observation system, comprising:
- a focussing optical input system (1) adapted to receive an infrared object beam (F.O.) and focussing an image beam (F.I.) into an image plane (10),
- an infrared read system comprising an infrared photodetector block (4) cooled to a predetermined temperature and disposed within said image plane, in order to detect the intensity received from the image beam as a function of the position within the image plane and to deliver a read signal,
- a device for detecting the displacement of an image formed within the the image plane relative to a reference position, said device comprising a return mirror (5) placed in front of and face to the field aperture of the focussing optical input system, the mirror having a fixed position and being directed so as to return its proper image to the read system (4),
characterized in that it further includes:
- a distance measuring device (6) adapted to receive from the read system (4) a signal of identification of said proper image returned by the mirror (5), and comprising a detection circuit which allows to detect the distance existing between the reference position constituted by a predetermined position of said proper image and the detected position of said image, said detection circuit delivering a distance signal.

2. An optical infrared image observation system according to claim 1 characterized in that the read system comprises a scan system (31, 32, 33) and an optical focussing system (2) allowing to transmit the light issuing from the image plane (1) to the infrared photodetector block (4), the return mirror (5) being seen by the infrared photodetector block (4) through the scan system, with the scanning of said plane being performed during a predetermined time interval.

3. An optical infrared image observation system according to claim 2, characterized in that it comprises a calculation circuit allowing to calculate the distance which is susceptible to exist between the theoretical position of the mirror and the detected position, and to deliver a distance signal in exchange.

4. An optical infrared image observation system according to claim 1, in which the optical input system is provided with alignment control means (7), characterized in that the distance signal delivered by the distance measuring device is transmitted to said control means (7).

5. An optical infrared image observation system according to claim 2, characterized in that the return mirror (5) is placed within the field aperture of the optical input system in a point located near the periphery of said field aperture.

6. An optical infrared image observation system according to claim 4, characterized in that the distance measuring device computes the coordinates of the detected distance and delivers two signals at least of distance coordinates to the alignment control means.

7. An optical infrared image observation system according to claim 3, comprising means (VU) for displaying images received by the focussing optical input system (1), the optical focussing device (2), the scan system (3), and the infrared photodetector block (4), characterized in that the display means comprise an image correcting circuit (VU1), and that the distance measuring device (6) transmits said distance signal to the image correction circuit (VU1).

8. An optical infrared image observation system according to claim 7, characterized in that the distance measuring device delivers two signals at least of distance coordinates to the image correcting circuit (VU1).

**Patentansprüche**

1. Optisches Beobachtungssystem für Infrarotbilder, das folgende Komponenten aufweist:
- ein optisches Eingangssystem (1) zur Scharfeinstellung, das einen infraroten Objektstrahl (F.O.) empfängt und einen Bildstrahl (F.I.) in eine Bildebene (10) fokussiert;
- ein Infrarotlesesystem mit einem Infrarot-Photodetektorblock (4), der auf eine festgesetzte Temperatur gekühlt und in der Bildebene zur Erfassung der Stärke des empfangenen Bildstrahles in Abhängigkeit von der Position in der Bildebene und zur Lieferung eines Lesesignals angeordnet ist,
- eine Vorrichtung zur Erfassung der Versetzung eines in der Bildebene erzeugten Bildes relativ zu einer Bezugsposition, wobei die Vorrichtung einen Umlenkspiegel (5) vor und gegenüber der Feldöffnung des optischen Eingangssystems zur Scharfeinstellung aufweist, der fest positioniert und so eingestellt ist, daß er auf das Lesesystem (4) sein eigenes Bild wirft, dadurch gekennzeichnet, daß es weiter ein Abstandsmeßgerät (6) aufweist, das vom Lesesystem (4) ein Identifikationssignal des vom Spiegel (5) zurückgeworfenen eigenen Bildes empfängt, und eine Erfassungsschaltung aufweist, die den Abstand zwischen der Bezugsposition, welche aus einer vorherbestimmten Position des eigenen Bildes besteht, und der erfaßten Position dieses Bildes zu erfassen gestattet, wobei die Erfassungsschaltung ein Abstandssignal liefert.

2. Optisches Beobachtungssystem für Infrarotbilder nach Anspruch 1, dadurch gekennzeichnet, daß das Lesesystem ein Abtastsystem (31, 32, 33) und eine optische Vorrichtung (2) zur Scharfeinstellung aufweist, wodurch die Übertragung des von der Bildebene (1) kommenden Lichtes zum Infrarot-Photodetektorblock (4) ermöglicht wird, wobei der Umlenkspiegel (5) vom Infrarot-Photodetektorblock (4) durch das Abtastsystem gesehen wird und die Abtastung der genannten Ebene innerhalb einer vorbestimmten Zeitdauer erfolgt.

3. Optisches Beobachtungssystem für Infrarotbilder nach Anspruch 2, dadurch gekennzeichnet, daß es eine Rechenschaltung aufweist, die den zwischen der theoretischen Position des Spiegels und der erfaßten Position bestehenden Abstand zu berechnen gestattet und dementsprechend ein Abstandssignal liefert.

4. Optisches Beobachtungssystem für Infrarotbilder nach Anspruch 1, bei dem das optische Eingangssystem Ausrichtungssteuermittel (7) besitzt, dadurch gekennzeichnet, daß das vom Abstandsmeßgerät gelieferte Abstandssignal an diese Steuermittel (7) übertragen wird.

5. Optisches Beobachtungssystem für Infrarotbilder nach Anspruch 2, dadurch gekennzeichnet, daß der Umlenkspiegel (5) in der Feldöffnung des optischen Systems in einem Punkte plaziert ist, der in Randnähe der Feldöffnung liegt.

6. Optisches Beobachtungssystem für Infrarotbilder nach Anspruch 4, dadurch gekennzeichnet, daß das Abstandsmeßgerät die Koordinaten des erfaßten Abstandes berechnet und mindestens zwei Signale der Abstandskoordinaten an die Ausrichtungssteuermittel (7) liefert.

7. Optisches Beobachtungssystem für Infrarotbilder nach Anspruch 3, das Mittel (VU) zur Anzeige des Bildes, das vom optischen Eingangssystem (1) zur Scharfeinstellung empfangen wird, die optische Vorrichtung (2) zur Scharfeinstellung, das Abtastsystem (3) und den Infrarot-Photodetektorblock (4) enthält, dadurch gekennzeichnet, daß die Anzeigemittel eine Bildkorrekturschaltung (VU1) aufweisen und daß die Abstandsmeßvorrichtung (6) das Abstandssignal an die Bildkorrekturschaltung (VU1) liefert.

8. Optisches Beobachtungssystem für Infrarotbilder nach Anspruch 7, dadurch gekennzeichnet, daß die Abstandsmeßvorrichtung mindestens zwei Signale der Abstandskoordinaten an die Bildkorrekturschaltung (VU1) liefert.

# FIG_1

# FIG_2

# FIG_3

FIG_4

FIG_5

FIG_6

# FIG_7

# FIG_8

# FIG_9

# FIG_10

# FIG_11

# FIG_12